(19) **Europäisches Patentamt / European Patent Office / Office européen des brevets**

(11) **EP 1 748 233 B1**

(12) **EUROPEAN PATENT SPECIFICATION**

(45) Date of publication and mention of the grant of the patent:
**14.10.2009 Bulletin 2009/42**

(51) Int Cl.:
*F16K 3/08* (2006.01)     *F16K 3/10* (2006.01)
*F16K 3/20* (2006.01)

(21) Application number: **06254004.2**

(22) Date of filing: **31.07.2006**

(54) **Low torque valve**

Ventil mit einem niedrigen Drehmoment

vanne à faible couple

(84) Designated Contracting States:
**DE FR GB**

(30) Priority: **29.07.2005 US 703992 P**

(43) Date of publication of application:
**31.01.2007 Bulletin 2007/05**

(73) Proprietor: **Barksdale, Inc.**
**Los Angeles,**
**California 90058 (US)**

(72) Inventors:
- **Rodriquez, James E.**
  **Aliso Viejo,**
  **California 92656 (US)**
- **Durongdej, Chailin**
  **Arcadia,**
  **California 91006 (US)**

- **Latif, Tariq**
  **Downey,**
  **California 90240 (US)**

(74) Representative: **Hedley, Nicholas James Matthew et al**
**Kilburn & Strode LLP**
**20 Red Lion Street**
**London**
**WC1R 4PJ (GB)**

(56) References cited:
| | |
|---|---|
| GB-A- 2 129 098 | GB-A- 2 277 573 |
| US-A- 2 852 040 | US-A- 3 473 551 |
| US-A- 3 556 151 | US-A- 3 761 054 |
| US-A- 5 862 833 | |

**Description**

BACKGROUND OF THE INVENTION

One type of valve, e.g. see US-5862833, includes a rotor with channels that direct high pressure fluid from a high pressure source to one of a plurality of receivers. Forces on the rotor that must be overcome to turn it, vary with fluid pressure to assure good sealing against the rotor as the fluid pressure varies. The valve commonly includes a pair of bodies lying on opposite sides of the rotor, each body holding a moveable member that has a through bore and that presses against a surface of the rotor. A seal device dynamically seals to the moveable member and statically seals to the walls of the body passage. The position of the seal device must be stabilized against movement by the high pressure. If the diameter of the seal surface that dynamically seals to the moveable member could be minimized while keeping a robust moveable member, then the force of the moveable member against a corresponding rotor surface could be minimized. This would minimize torque while still varying the force of each moveable member against the rotor as the pressure of the high pressure fluid varies.

SUMMARY OF THE INVENTION

In accordance with one embodiment of the invention, a high pressure valve is provided of a type that includes a rotor held between a pair of movable members that move within bodies and press against rotor opposite surfaces. Each movable member presses with a force that is largely proportional to the pressure of the high pressure fluid, but the total forces on the rotor are reduced from the too-high levels existing in previous valves of this type. The force is reduced by providing a seal device that is constrained from forward movement by a flange fixed to the body, and with the seal device dynamically sealing to a cylindrical surface on the outside of the moveable member. The flange that is fixed to the body is part of an insert that is screwed into a front end of the body. The flange has a front surface that abuts the rear end of a spring whose front spring end abuts a shoulder on the moveable member, to assure that the movable member remains pressed against the rotor even when there is no pressure.

The novel features of the invention are set forth with in the appended claims. The invention will be best understood from the following description when read in conjunction with the accompanying drawings.

BRIEF DESCRIPTION OF THE DRAWINGS

Fig. 1 is a partial exploded isometric view of a valve of the type used in the prior art and in the present invention.
Fig. 2 is a partial sectional view of a valve of the prior art.
Fig. 3 is a sectional view of a valve of the present invention.
Fig. 4 is a sectional view showing a part of the valve of Fig. 3
Fig. 5 is an isometric view showing one surface of the rotor of the valve of Fig. 3.
Fig. 6 is an isometric view showing a surface of the rotor of Fig. 5 that is hidden in Fig. 5.

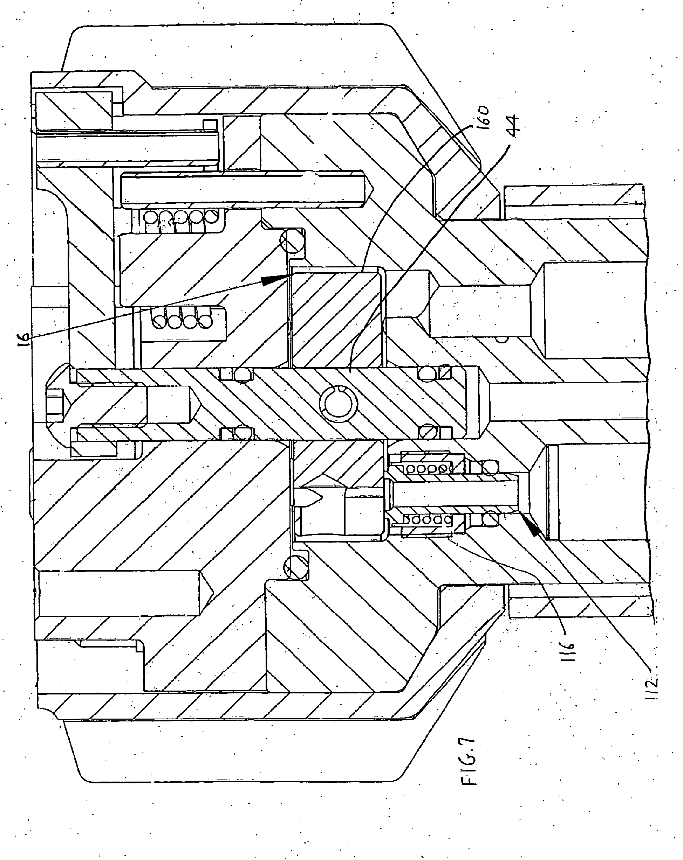

Fig. 7 is a sectional view of a portion of a valve system that includes the valve of Fig. 3.

DESCRIPTION OF THE PREFERRED EMBODIMENTS

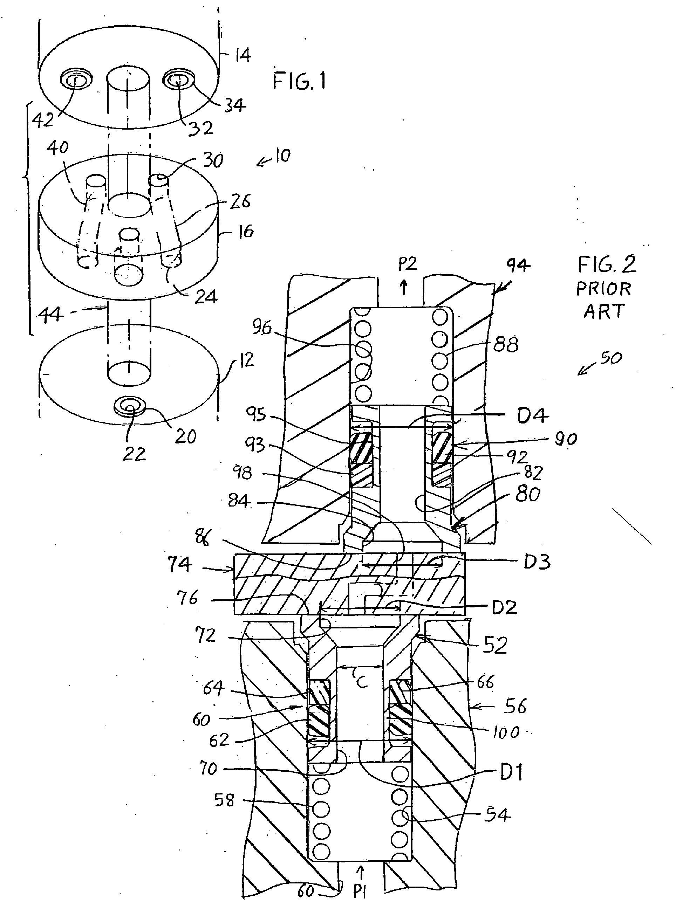

Fig. 1 illustrates a valve 10 with stationary lower and upper bodies 12, 14 and with a rotor 16 lying between them. A moveable member 20 that moves within a passage of the lower body 12, can slide slightly towards and away from the rotor to assure that it is pressed firmly against the rotor. The moveable member has a bore 22 that supplies high pressure fluid (e.g. possibly 689,5 bar (10,000 psi)) to the rotor. When the rotor is turned to a selected position, the lower end 24 of a rotor passageway or channel 26 is aligned with bore 22, and the opposite end 30 of the channel becomes aligned with a bore 32 of a movable member 34 that lies in the upper body 14. The moveable members 20 and 34 press against opposite surfaces of the rotor. The rotor has another channel 40 which connects the bore 22 to another bore 42 of another moveable member when the rotor is turned in the opposite direction to another selected position. A shaft 44 is attached to the rotor and is used to turn it, and a housing holds the lower and upper bodies together.

Fig. 2 illustrates a portion of a prior art valve 50 of the type shown in Fig. 1. A moveable member 52 which lies in a passage 54 of a lower body 56, is urged upward by a compression spring 58. High pressure fluid is supplied to an input 60 port. A seal ring device 60 which includes an O-ring, or elastomeric seal ring 62 and a backup ring 64 lies in a groove 66 of the moveable member 52. The seal device seals statically against the movable member 52 and dynamically against the walls of the passage 54 in which the movable member slides. The backup ring 64 helps avoid extrusion of the elastomeric seal ring. A through bore 70 of diameter C in the moveable member has an upper end 72 that opens to the rotor 74. The moveable member has an upper face 76 that lies around the passage and that presses upward against the rotor.

The upper body 94 holds a movable member 80 of the same construction as the lower moveable member. The upper movable member has a bore 82 with a lower end 84 that opens to the rotor, and a movable member lower end 86 that presses against the rotor. A spring 88 presses the upper movable member down against the rotor. A seal device 90 which includes an o-ring or elastomeric seal ring 92 and a backup ring 93 lies in a groove 95 of the moveable member 80. The seal device seals statically against the moveable member 80 and seals dynamically against the walls of a passage 96 in the upper body 94.

When the pressure P1 of source fluid at the input port 60 is zero, then the forces on the rotor are the forces of the compression springs 58 and 88 (plus the downward force of another spring on another movable member in the upper body). The springs apply moderate forces such as 5 pounds each, so there is then a low net force and low friction on the rotor and the rotor can be turned using only a small torque. When the pressure P1 is high, such as at 689,5 bar (10,000 psi), then there are high forces on the rotor. The forces on the rotor includes the force of the high pressure (P1) fluid over the area of a circle of diameter D1 where the O-ring seal 62 dynamically seals to walls of the passage 54 in the lower body, minus the force over the area D2 where the upper end 72 of the bore in the movable member opens to the rotor.

When the pressure P1 at the source member passage 70 is high, such as at 689,5 bar (10,000 psi), then the pressure P2 at the upper movable member bore 82 is lower. If there is a high flow rate of fluid though the narrow rotor channel 98, then the pressure P2 may be much lower than P1. The downward force on the rotor (other than that applied by the spring of the other receiver member) is equal to the pressure P2 over the area of the outside diameter D4 of the upper O-ring seal or ring seal 90 minus the pressure over the area of the bore lower end diameter D3. In one example, it is assumed that there is a high rate of fluid flow though the rotor channel 98, so P2 equals 344,75 bar (5,000 psi) at a time when P1 equals 689,5 bar (10,000 psi). It is also assumed that diameter D1 equals 16,76 mm (0.66 inch), diameter D2 equals 12,7 mm (0.5 inch), diameter D3 equals 12,7 mm (0.5 inch) and diameter D4 equals 16,76 mm (0.66 inch). The upward force on the rotor (not including the small forces of the compression springs) equals the area at D1 219 $mm^2$ (0.34 $inch^2$) times P1, minus the area at D2 129 $mm^2$ (0.20 $inch^2$) times P1, and the downward force equals the area D3 129 $mm^2$ (0.20 $inch^2$) times P2, minus the area at D4 219 $mm^2$ (0.34 $inch^2$) times P2. The net upward force on the rotor is given by (assuming P1=10.000psi):

$$[(219mm^2 (0.34 inch^2) \times P1) - (129mm^2 (0.20 inch^2) \times P1] = 6,23KN (1400 \text{ pounds})$$

The net downward force on the rotor is given by (assuming P2=5,000psi):

$$[(219mm^2 (0.34 inch^2) \times P2) - (129mm^2 (0.20 inch^2) \times P2)] = 3,11KN (700 \text{ pounds})$$

The total force on the rotor is:

$$6,23KN (1400 \text{ pounds}) \text{ pounds}) + 3,11KN (700 \text{ pounds}) = 9,34KN (2100 \text{ pounds})$$

It requires a large torque to turn the rotor even with low friction between the rotor faces and the faces of the moveable members. The forces are minimized by constructing each movable member 52 and 80 with a small outside diameter, as by using a small thickness sleeve portion 100 of the movable member. It would be desirable if the torque could be lowered somewhat using the same dimensions of the rotor and of the seal member passage ends. It should be noted that in designing a valve , an engineer assures that the ratio of bore end diameter D2 to seal diameter D1 is at least about 0.8 (0.72 to 0.88) to avoid a leak path. Another way to describe this is to mention that the ratio of areas at D2 to D1 should be about 0.65. The ratio of about 0.8 can be maintained while minimizing forces on the rotor, by minimizing the sealing diameter D1 where the seal 62 seal to the movable member. However, the bore diameter C must be a certain minimum such as 7,62 mm (0.3 inch) in the above example, to minimize restriction of fluid flow.

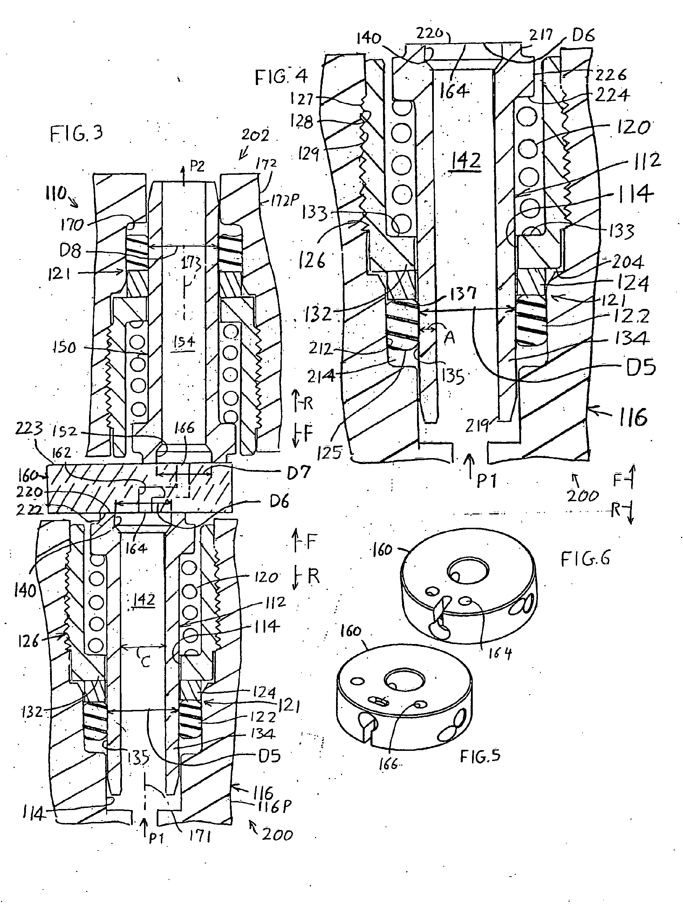

The valve shown in Fig. 3 minimizes forces on the rotor 160 by constructing the valve so the sealing diameter D5 of a seal ring 122 is a minimum, so the difference in diameters D5 - D6 (with D6 being 0.8 times the sealing diameter D5) is a minimum.

Figs. 3 and 4 show parts of a valve 110 of the present invention which uses valve portions 200, 202 that lie on opposite sides of a rotor 160 and that are of the same constructions so they are substantially identical. The valve portions have bodies of the same construction as in Fig. 2, but with modifications discussed below. The valve includes lower and upper movable member 112, 150 that each lies in a passage 114,170 of a corresponding valve body 116, 172 and that each has a bore 142, 154 though which high pressure fluid (e.g. over 3,45 bar (50 psi)) passes in flowing though a channel 162 of a rotor 160. Each moveable member can move slightly along an axis 171, 173. In further discussions, applicant describes directions from the upper or lower valve portion towards the rotor as a forward F direction and describes opposite directions as rearward R directions. Since the two valve portions are of the same construction, applicant will describe only one of them 200 in detail.

The movable member 112 is urged forward F towards the rotor 160 by a compression spring 120. As shown in Fig. 4, a seal device 121 which includes an elastomeric seal ring 122 and a backup ring 124 of a material such as TEFLON, are pushed forward towards the rotor by pressured fluid at the pressure P1. The pressured fluid presses forwardly F against a rear end 125 of the seal ring 122. The seal ring pushes the backup ring 124 against a rearwardly R facing shoulder, or abutment 204 that is fixed to the rest of the valve body 116. The valve body has a smooth internal cylindrical surface 212 that the seal ring 122 and backup ring 124 can slide on. There is a space 214 between the rear end of the seal ring and the valve body.

In order to facilitate construction of the valve, the abutment 204 and cylindrical sealing surface 212 are formed on an insert 126 that is part of the lower valve portion 200. The insert 126 has external threads 127 and has been installed by forming an enlarged hole portion or passageway 128 in the body part 116P with internal threads 129, and screwing the insert into the threaded hole. It is possible to instead use a snap ring as a holder to hold an insert, although applicant prefers a thread which prevents insert shifting. The compression spring 120 lies forward of an inward flange 132 of the insert and abuts a forwardly facing shoulder 133 of the flange. The seal ring device 121 lies rearward of the flange. In this arrangement, dynamic sealing of the moveable member 112 to the valve body occurs at the inside surface 137 of the elastomeric seal 122 against a cylindrical outer seal surface 135 of the moveable member, with the dynamic seal surface being of diameter D5 which is the outside diameter of a cylindrical part 134 of the movable member 112. Dynamic sealing occurs at the inside surface 137 of the seal ring because the moveable member can move forward and rearward slightly with respect to the seal ring inner surface. The seal ring 122 is statically sealed to the body because the seal ring cannot move relative to the rigid backup ring 124 that cannot move because it abuts the stationary flange shoulder 204. The diameter D6 of the upper end 140 of the movable member bore 142 is the same (0.5 inch) as that in Fig. 2 and lies on an axis 171 that extends forward and rearward. The upper moveable member 150 (Fig. 3) is of the same construction as the lower one 112, so sealing of moveable member 150 is at diameter D8 which equals D5, and the lower end 152 of the seal member passage 154 has a diameter D7 which is the same as D6.

Due to the fact that the elastomeric seal 122 dynamically seals to the outside of the moveable member, the dynamic seal diameter D5 is less than the diameter D1 of Fig. 2. In a valve that applicant has designed, the diameter D5 is 15,75 mm (0.62 inch) which is less than the diameter D1 of 16,76 mm (0.66 inch), and the thickness A of 4,06 mm (0.16 inch) of the main portion of the movable member, which extends along a majority of the movable member length, is greater for greater durability.

The net upward force on the rotor 160 of Fig. 3 is given by (assuming P1=689,5 bar (10,000psi)):

$$[(200mm^2 (0.31 inch^2) \times P1) - (129mm^2 (0.20 inch^2) \times P1)] = 4,45 \ KN \ (1000 \ pounds)$$

The net downward force on the rotor by moveable member 150 is given by (assuming P2=5000psi):

$$[(200mm^2 (0.31 inch^2) \times P2) - (129mm^2 (0.20 inch^2) \times P2)] = 2,22 \ KN \ (500 \ pounds)$$

The total force on the rotor is 6,67 KN (1500 pounds), which is a 28% reduction compared with the 9,34 KN (2100 pounds) of force of the valve of Fig 2 (for the same high pressure P1), resulting in less torque being required for turning the rotor.

The moveable member 112 has a front and rear ends 217, 219 and has a front face 220 that is pressed against a corresponding surface 222 of the rotor which also has an opposite surface 223. The member front face projects forward of the front of the body 116. The spring 120 that urges the movable member forward presses against a rear shoulder 224 formed on the movable member and against the front shoulder 133 on the insert flange. The spring is isolated from the continual flow of pressured fluid. The moveable member rear shoulder 224 is formed on an outer flange 226 of the movable member.

Thus, the invention provides a valve of the type wherein sealing forces of moveable members against surfaces of a rotor with channels, vary with the pressure of fluid being controlled by the valve, and wherein the total forces of the movable members against the rotor are minimized. By minimizing forces against the rotor, applicant minimizes friction of the movable members against the rotor, making it easier to turn the rotor. This is accomplished by using an arrangement where the seal ring device abuts a stationary body abutment such as an abutment formed on an insert that is fixed to a body, and the seal ring is dynamically sealed to the movable member at the inside diameter of the seal ring and is statically sealed to the body at the outside of the seal ring. This reduces the diameter of the surface of the movable member that is dynamically sealed against and therefore reduces the area over which the fluid pressure (P1 or P2) presses the movable member forward towards the rotor.

Although particular embodiments of the invention have been described and illustrated herein, it is recognized that modifications and variations may readily occur to those skilled in the art, and consequently, the scope of the invention is limited only by the appended claims.

**Claims**

1.   A valve comprising a rotor (160), a pair of bodies (116,172) that each has a passage (114,170) that extends in front and rear directions (F,R) and a pair of moveable members (112) that each is moveable in front and rear directions respectively toward and away from said rotor along a corresponding axis (171,173) within a corresponding one of said body passages, each moveable member having front and rear member ends (217,219) and a bore (142,154) extending between said member ends to carry pressured fluid, said rotor being sandwiched between front faces (220) of said moveable members, said rotor having opposite rotor surfaces (222,223) and at least one channel (162) that extends between said rotor surfaces, said valve also including a pair of seal ring devices (121) that each seals a moveable member to a corresponding body, wherein:

     each of said bodies has a body internal seal surface (212), each of said moveable members has a member outer seal surface (135), and each seal ring device (121) seals to a body internal seal surface (212) and to a corresponding member outer seal surface (135);
     each seal ring device has a rear end (125) exposed to said pressured fluid and each seal ring device rear end is pressed by said pressured fluid towards the rotor,
     **characterized in that** each of said bodies has a rearward-facing body abutment (204), and each seal ring device (121) is held against forward movement towards the rotor by a corresponding one of said body abutments.

2.   The valve described in claim 1 including a spring (120) that urges said moveable member forward towards said rotor, and wherein:

     the front end of each of said moveable members forms a rearwardly-facing moveable member shoulder (224); each of said bodies has a body inward flange (133) lying rearward of the corresponding moveable member shoulder, said body inward flange having forward and rearward facing body shoulders, said rearward facing body shoulder (204) forming said abutment; said spring extends between said rearward facing moveable member shoulder and said forward facing body shoulder, and presses them apart.

3.   The valve described in claim 1 wherein:

     said bore (142) in said moveable member has a predetermined constant bore diameter (C) along most of its length, said moveable member has an outside surface of a predetermined outside diameter (D5) along part of its length, and said bore has a front end of greater diameter (D6) than said constant bore diameter but less than said moveable member outside diameter (D5), with the ratio (D6/D5) being about 0.8, and with said seal ring device sealed against a portion of said moveable member outside surface (135) of said constant outside diameter (D5).

4.   The valve described in claim 1 wherein:

     each of said bodies includes a body part having a through passageway (114,170) with a passageway front portion, and each body includes an insert (126) that is held in a fixed position in said body passageway front portion;
     each insert having a rear portion forming an internal flange (132) with forward facing and rearward facing shoulders, said rearward facing shoulder (204) forming one of said abutments; and including
     a compression spring (120) having a spring rear end lying against said front facing shoulder (133) of said insert internal flange, and said moveable member has a rearward-facing shoulder (224) that abuts a front end of said spring.

**Patentansprüche**

1. Ventil mit einem Rotor (160), einem Paar Körper (116, 172), die jeweils einen Durchgang (114, 170) aufweisen, der sich nach vorne und nach hinten (F, R) erstreckt, und einem Paar beweglicher Elemente (112), die jeweils nach vorne bzw. nach hinten entlang einer entsprechenden Achse (171, 173) in einer entsprechenden der Körperdurchgänge zum Rotor oder von diesem weg bewegbar sind, wobei jedes bewegliche Element vordere und hintere Elementenden (217, 219) und eine Öffnung (142, 154) aufweist, die sich zwischen den Elementenden erstreckt, um Druckfluid zu befördern, wobei der Rotor zwischen Vorderflächen (220) der beweglichen Elemente sandwichartig vorgesehen ist, wobei der Rotor gegenüberliegende Rotorflächen (222, 223) und zumindest einen Kanal (162) aufweist, der sich zwischen den Rotorflächen erstreckt, wobei das Ventil auch ein Paar Dichtungsringeinrichtungen (121) enthält, die jeweils ein bewegliches Element mit einem entsprechenden Körper abdichten, wobei:

   jeder Körper eine im Körperinneren vorgesehene Dichtungsfläche (212) aufweist, wobei jedes bewegliche Element eine am Element außen vorgesehene Dichtungsfläche (135) hat, und wobei jede Dichtungsringeinrichtung (121) mit einer im Körperinneren vorgesehenen Dichtungsfläche (212) und einer entsprechenden, am Element außen vorgesehenen Dichtungsfläche (135) abdichtet;
   wobei jede Dichtungsringeinrichtung ein hinteres Ende (125) aufweist, das dem Druckfluid ausgesetzt ist, und wobei jedes hintere Ende der Dichtungsringeinrichtung durch das Druckfluid hin zum Rotor gepresst wird, **dadurch gekennzeichnet, dass** jeder Körper ein nach hinten gerichtetes Körperauflager (204) aufweist, und dass jede Dichtungsringeinrichtung (121) mittels eines entsprechenden der Körperauflager gegen eine Vorwärtsbewegung hin zum Rotor gehalten wird.

2. Ventil nach Anspruch 1, mit einer Feder (120), die das bewegliche Element nach vorne hin zum Rotor drängt, und wobei:

   das vordere Ende jedes beweglichen Elements einen nach hinten gerichteten, beweglichen Elementansatz (224) bildet;
   jeder Körper einen nach innen gerichteten Körperflansch (133) aufweist, der hinter dem entsprechenden beweglichen Elementansatz liegt, wobei der nach innen gerichtete Körperflansch nach vorne und nach hinten gerichtete Körperansätze enthält, wobei der nach hinten gerichtete Körperansatz (204) das Auflager bildet;
   sich die Feder zwischen dem nach hinten gerichteten, beweglichen Elementansatz und dem nach vorne gerichteten Körperansatz befindet und diese auseinander drückt.

3. Ventil nach Anspruch 1, wobei die Öffnung (142) im beweglichen Element entlang dem Großteil dessen Länge einen vordefinierten und konstanten Lochdurchmesser (C) aufweist, wobei das bewegliche Element entlang eines Teils seiner Länge eine Außenfläche mit einem vordefinierten Außendurchmesser (D5) aufweist, und wobei das Loch ein vorderes Ende hat, dessen Durchmesser (D6) größer als der konstante Lochdurchmesser, jedoch kleiner als der Außendurchmesser (D5) des beweglichen Elements ist, wobei das Verhältnis (D6/D5) ungefähr 0,8 ist, und wobei die Dichtungsringeinrichtung an einem Abschnitt der Außenfläche (135) des beweglichen Elements, die einen konstanten Außendurchmesser (D5) aufweist, dichtet.

4. Ventil nach Anspruch 1, wobei:

   jeder Körper einen Körperteil enthält, der einen Durchlass (114, 170) mit einem Durchlass-Vorderabschnitt aufweist, und wobei jeder Körper einen Einsatz (126) enthält, der im Durchlass-Vorderabschnitt des Körpers in einer festen Position gehalten wird;
   jeder Einsatz einen hinteren Abschnitt aufweist, der einen inneren Flansch (132) mit nach vorne und nach hinten gerichteten Ansätzen bildet, wobei die nach hinten gerichteten Ansätze (204) eines der Auflager bilden; und mit:

   einer Druckfeder (120), die ein hinteres Federende aufweist, das am nach vorne gerichteten Ansatz (133) des inneren Flansches des Einsatzes anliegt, und wobei das bewegliche Element einen nach hinten gerichteten Ansatz (224) aufweist, der an ein vorderes Ende der Feder angrenzt.

**Revendications**

1.  Soupape comprenant un rotor (160), une paire de corps (116, 172) qui possèdent chacun un passage (114, 170) qui s'étend dans des directions avant et arrière (F, R) et une paire d'éléments mobiles (112) qui sont chacun mobiles dans des directions avant et arrière respectivement pour se rapprocher et s'éloigner dudit rotor le long d'un axe correspondant (171, 173) à l'intérieur d'un passage correspondant desdits passages de corps, chaque élément mobile possédant des extrémités d'élément avant et arrière (217, 219) et un alésage (142, 154) s'étendant entre lesdites extrémités d'élément pour transporter un fluide sous pression, ledit rotor étant pris en sandwich entre des faces avant (220) desdits éléments mobiles, ledit rotor possédant des surfaces de rotor opposées (222, 223) et au moins un canal (162) qui s'étend entre lesdites surfaces de rotor, ladite soupape comprenant également une paire de dispositifs annulaires d'étanchéité (121) qui assurent chacun l'étanchéité d'un élément mobile sur un corps correspondant, dans laquelle :

    chacun desdits corps possède une surface d'étanchéité interne de corps (212), chacun desdits éléments mobiles possède une surface d'étanchéité extérieure d'élément (135), et chaque dispositif annulaire d'étanchéité (121) assure une étanchéité sur une surface d'étanchéité interne de corps (212) et sur une surface d'étanchéité extérieure d'élément correspondante (135) ;
    chaque dispositif annulaire d'étanchéité possède une extrémité arrière (125) exposée audit fluide sous pression et chaque dispositif annulaire d'étanchéité extrémité arrière est comprimé par ledit fluide sous pression vers le rotor,

    **caractérisée en ce que** chacun desdits corps possède une butée de corps tournée vers l'arrière (204), et chaque dispositif annulaire d'étanchéité (121) est retenu pour empêcher le mouvement vers l'avant vers le rotor par une butée correspondante parmi lesdites butées de corps.

2.  Soupape selon la revendication 1, comprenant un ressort (120) qui pousse ledit élément mobile vers l'avant vers ledit rotor, et dans laquelle :

    l'extrémité avant de chacun desdits éléments mobiles forme un épaulement d'élément mobile tourné vers l'arrière (224) ;
    chacun desdits corps possède une bride intérieure de corps (133) se trouvant vers l'arrière de l'épaulement d'élément mobile correspondant, ladite bride intérieure de corps possédant des épaulements de corps tournés vers l'avant et vers l'arrière, ledit épaulement de corps tourné vers l'arrière (204) formant ladite butée ;
    ledit ressort s'étend entre ledit épaulement d'élément mobile tourné vers l'arrière et ledit épaulement de corps tourné vers l'avant, et les comprime pour les séparer.

3.  Soupape selon la revendication 1, dans laquelle :

    ledit alésage (142) dans ledit élément mobile possède un diamètre d'alésage constant prédéterminé (C) le long de la plupart de sa longueur, ledit élément mobile possède une surface extérieure d'un diamètre extérieur prédéterminé (D5) le long d'une partie de sa longueur, et ledit alésage possède une extrémité avant de diamètre (D6) supérieur audit diamètre d'alésage constant mais inférieur audit diamètre extérieur d'élément mobile (D5), avec le rapport (D6/D5) étant d'environ 0,8, et avec ledit dispositif annulaire d'étanchéité fixé de façon étanche contre une partie de ladite surface extérieure d'élément mobile (135) dudit diamètre extérieur constant (D5).

4.  Soupape selon la revendication 1 dans laquelle :

    chacun desdits corps comprend une partie de corps possédant une voie de passage (114, 170) avec une partie avant de voie de passage, et chaque corps comprend une pièce rapportée (126) qui est maintenue dans une position fixe dans ladite partie avant de voie de passage de corps ;
    chaque pièce rapportée possédant une partie arrière formant une bride interne (132) avec des épaulements tournés vers l'avant et vers l'arrière, ledit épaulement tourné vers l'arrière (204) formant une desdites butées ; et comprenant
    un ressort de compression (120) possédant un ressort extrémité arrière se trouvant contre ledit épaulement tourné vers l'avant (133) de ladite bride interne de pièce rapportée, et ledit élément mobile possède un épaulement tourné vers l'arrière (224) qui prend appui sur une extrémité avant dudit ressort.

FIG. 1

FIG. 2
PRIOR
ART

EP 1 748 233 B1

FIG. 3

FIG. 4

FIG. 5

FIG. 6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5862833 A